# EUROPEAN PATENT APPLICATION

(11) **EP 4 746 051 A1**
(43) Date of publication of application: **20.05.2026**
(21) Application number: 25208002.3
(22) Date of filing: 10.10.2025
(51) Int. Cl.: H01M 4/04, H01M 4/1397, H01M 4/58

(54) **POSITIVE ELECTRODE ACTIVE MATERIAL FOR FLUORIDE ION BATTERY, METHOD FOR ITS PRODUCTION, POSITIVE ELECTRODE MIXTURE FOR FLUORIDE ION BATTERY, AND FLUORIDE ION BATTERY**

(30) Priority: 13.11.2024 JP 2024198457
(71) Applicant: TOYOTA JIDOSHA KABUSHIKI KAISHA, Toyota-shi, Aichi-ken 471-8571 (JP)
(72) Inventor: NOI, Kousuke, Toyota-shi, 471-8571 (JP)
(74) Representative: Kuhnen & Wacker Patent- und Rechtsanwaltsbüro PartG mbB

(57) **Abstract**

The present disclosure provides a positive electrode active material for a fluoride ion battery that can improve battery discharge energy, as well as a method for producing it, a positive electrode mixture for a fluoride ion battery that comprises the positive electrode active material for a fluoride ion battery, and a fluoride ion battery that comprises the positive electrode mixture for a fluoride ion battery. The positive electrode active material for a fluoride ion battery of the disclosure comprises copper and sulfur, and is amorphous. The method for producing a positive electrode active material for a fluoride ion battery according to the disclosure comprises the following steps: providing a fluoride ion battery comprising a positive electrode active material layer which comprises covellite, and charging the fluoride ion battery at 500 mAh to 800 mAh per gram of covellite.

## Description

### FIELD

The present disclosure relates to a positive electrode active material for a fluoride ion battery, to a method for its production, to a positive electrode mixture for a fluoride ion battery and to a fluoride ion battery.

### BACKGROUND

Compounds of Group 16 elements and copper are known as positive electrode active materials for fluoride ion batteries.

PTL 1, for example, discloses a fluoride ion battery wherein the positive electrode active material layer comprises a positive electrode active material having a composition represented by Cu_{X}S (1 ≤ x ≤ 2, and especially 1.8 ≤ x ≤ 2).

PTL 2 discloses a positive electrode active material for a fluoride ion battery, which is copper selenide.

### [CITATION LIST]

### [PATENT LITERATURE]

[PTL 1] Japanese Unexamined Patent Publication No. 2018-186067
[PTL 2] Japanese Unexamined Patent Publication No. 2024-104108

### SUMMARY

### [TECHNICAL PROBLEM]

Fluoride ion batteries comprising positive electrode active materials comprising copper and sulfur are in need of improvement from the viewpoint of discharge energy.

It is an object of the present disclosure to provide a positive electrode active material for a fluoride ion battery that can improve battery discharge energy, as well as a method for producing it, a positive electrode mixture for a fluoride ion battery that comprises the positive electrode active material for a fluoride ion battery, and a fluoride ion battery that comprises the positive electrode mixture for a fluoride ion battery.

### [SOLUTION TO PROBLEM]

The present inventors have found that the aforementioned object can be achieved by the following means.

### <Aspect 1>

A positive electrode active material for a fluoride ion battery,
wherein the positive electrode active material comprises copper and sulfur, and
wherein the positive electrode active material is amorphous.

### <Aspect 2>

The positive electrode active material for a fluoride ion battery according to aspect 1, which is produced by charging a fluoride ion battery having a covellite-comprising positive electrode active material layer, at 500 mAh to 800 mAh per gram of covellite.

### <Aspect 3>

The positive electrode active material for a fluoride ion battery according to aspect 1 or 2, wherein the molar ratio of copper to sulfur is 0.70 to 1.70.

### <Aspect 4>

The positive electrode active material for a fluoride ion battery according to aspect 3, wherein the molar ratio is 0.85 to 1.25.

### <Aspect 5>

The positive electrode active material for a fluoride ion battery according to any one of aspects 2 to 4, wherein:
the positive electrode active material layer further comprises a solid electrolyte, and
the solid electrolyte has the composition Pb₁₋ₓZrₓF₂₊₂ₓ, wherein 0 < x < 1.

### <Aspect 6>

The positive electrode active material for a fluoride ion battery according to aspect 5, wherein x is 0.01 to 0.3.

### <Aspect 7>

A positive electrode mixture for a fluoride ion battery, comprising a positive electrode active material for a fluoride ion battery according to any one of aspects 1 to 6.

### <Aspect 8>

A fluoride ion battery,
having a positive electrode active material layer, and
the positive electrode active material layer comprising a positive electrode mixture for a fluoride ion battery according to aspect 7.

### <Aspect 9>

A method for producing a positive electrode active material for a fluoride ion battery according to any one of aspects 1 to 6, the method including the following steps:
providing a fluoride ion battery having a positive electrode active material layer comprising covellite, and
charging the fluoride ion battery at 500 mAh to 800 mAh per gram of covellite.

### <Aspect 10>

The method for producing a positive electrode active material for a fluoride ion battery according to aspect 9, wherein the fluoride ion battery is charged at a temperature of 130°C or lower.

### [ADVANTAGEOUS EFFECTS OF INVENTION]

According to the present disclosure it is possible to provide a positive electrode active material for a fluoride ion battery that can improve battery discharge energy, as well as a method for producing it, a positive electrode mixture for a fluoride ion battery that comprises the positive electrode active material for a fluoride ion battery, and a fluoride ion battery that comprises the positive electrode mixture for a fluoride ion battery.

### BRIEF DESCRIPTION OF DRAWINGS

Fig. 1 is a simplified cross-sectional view showing an example of a fluoride ion battery of the disclosure.
Fig. 2 shows charge curves for the batteries of the Examples and Comparative Examples.
Fig. 3 shows discharge curves for the batteries of the Examples and Comparative Examples.
Fig. 4 shows an XRD pattern for the positive electrode active material layer of Example 1, after charging under prescribed conditions.
Fig. 5 shows an XRD pattern for the positive electrode active material layer of Example 1, initially (before charge), after charge and after discharge under prescribed conditions, and XRD patterns for CuS, Pb_{0.9}Zr_{0.1}F_{2.2} (solid electrolyte of positive electrode active material layer) and La_{0.95}Sr_{0.05}F_{2.95} (solid electrolyte of solid electrolyte layer).
Fig. 6 shows an XRD pattern for the positive electrode active material layer of Comparative Example 1, after charging under prescribed conditions.
Fig. 7 shows an XRD pattern for the positive electrode active material layer of Comparative Example 2, after charging under prescribed conditions.
Fig. 8 shows an XRD pattern for the positive electrode active material layer of Comparative Example 3, after charging under prescribed conditions.
Fig. 9 shows an XRD pattern for the positive electrode active material layer of Comparative Example 4, after charging under prescribed conditions.
Fig. 10 shows an XRD pattern for the positive electrode active material layer of Comparative Example 4, initially (before charge) and after charging under prescribed conditions, and XRD patterns for CuS, Pb_{0.9}Zr_{0.1}F_{2.2} (solid electrolyte of positive electrode active material layer) and La_{0.95}Sr_{0.05}F_{2.95} (solid electrolyte of solid electrolyte layer).

### DESCRIPTION OF EMBODIMENTS

An embodiment of the disclosure will now be described in detail. The disclosure is not limited to the embodiment described below, however, and various modifications may be implemented which do not depart from the gist thereof.

### <Positive electrode active material for a fluoride ion battery>

The positive electrode active material for a fluoride ion battery of the disclosure comprises copper and sulfur, and is amorphous.

The present inventors have found, unexpectedly, a novel positive electrode active material for a fluoride ion battery comprises copper and sulfur, and is amorphous.

The present inventors have also found that discharge energy is improved with a fluoride ion battery comprising such a positive electrode active material. Without being restricted to any particular theory, the reason for this is conjectured to be as follows. Specifically, it is believed that such a composition can inhibit production of active materials with high resistance at low temperatures such as room temperature (such as copper fluoride (CuF2)) during charge. The positive electrode active material of the disclosure also has lower resistance and a higher reaction potential than CuF2. Presumably, electrode reaction proceeds smoothly even at low temperatures such as room temperature, thus allowing larger discharge energy to be extracted.

That the positive electrode active material for a fluoride ion battery of the disclosure is amorphous can be confirmed by the absence of any observable diffraction peak from copper fluoride (CuF₂) or copper sulfides such as covellite (CuS), for example, in X-ray diffraction (XRD) measurement. The XRD measurement can be carried out, for example, by a concentration method in which CuKα rays are irradiated using a SmartLab by Rigaku Corp. as the X-ray diffractometer, under conditions with a tube voltage of 45 kV and a tube current of 200 mA. The measurement described above may be carried out after sealing the sample in an airtight sample stage with an argon atmosphere. The substrate on which the sample is mounted may be a non-reflecting Si board. The absence of any observable diffraction peak from copper fluoride (CuF₂) means that when CuKα rays are used, for example, there is no observable peak near 31.5° on the (100) plane of CuF2, no observable peak near 33.5° on the (-111) plane, no observable peak near 35.3° on the (-102) plane and no observable peak near 37.4° on the (110) plane. Similarly, the absence of any diffraction peak from covellite (CuS) means that, for example, for CuS there is no observable peak near 29.2° on the (102) plane, no observable peak near 31.7° on the (103) plane, no observable peak near 32.8° on the (006) plane and no observable peak near 47.9° on the (110) plane. In addition to CuKα-rays, the XRD measurement may be carried out using, for example, MoKα-rays or emitted X-rays of any desired wavelength. In this case, the value of the wavelength of the irradiated X-rays is used to calculate the diffraction angle satisfying the Bragg formula for each plane, and by confirming that no peak exists at each angle it is possible to confirm that no diffraction peaks are observed from copper fluoride (CuF₂) or copper sulfide such as covellite (CuS).

The positive electrode active material for a fluoride ion battery of the disclosure is produced by charging a fluoride ion battery having a positive electrode active material layer containing covellite (CuS), at 500 mAh to 800 mAh per gram of covellite.

The present inventors have found that the novel positive electrode active material for a fluoride ion battery produced in this manner comprises copper and sulfur, and is amorphous. The presence of copper and sulfur in the positive electrode active material for a fluoride ion battery can be confirmed by either of the following:
· Determining that covellite is used as a starting material,
· Identification by inductively coupled plasma emission spectroscopy (ICP-AES).

Covellite is typically hexagonal copper sulfide having the composition CuS, and the space group P63/mmc. Covellite is also known as copper blue or covelline.

The covellite may be a commercial product, or it may be prepared by a common method.

In the positive electrode active material for a fluoride ion battery of the disclosure, the molar ratio of copper with respect to sulfur may be 0.70 to 1.70. The molar ratio may be 0.75 or higher, 0.80 or higher, 0.85 or higher, 0.90 or higher, 0.95 or higher or 1.00 or higher, and 1.65 or lower, 1.60 or lower, 1.50 or lower, 1.40 or lower, 1.30 or lower, 1.25 or lower, 1.20 or lower, 1.15 or lower, 1.10 or lower, 1.05 or lower or 1.00 or lower, or it may be 1.00. The typical composition of covellite is x = 1, but since quantitative analysis of sulfur is difficult, it is often detected as a composition with sulfur at lower than the actual amount (a larger x value) or in excess of the actual amount (a smaller x value). Particularly in the case of analysis methods with acid dissolution steps such as ICP-AES, the volatile loss of the sulfur component can result in analysis results for the composition with a lower sulfur amount (a larger x value) than the actual amount. This is thought to also hold for measurement of the composition of the positive electrode active material for a fluoride ion battery of the disclosure that can be produced using covellite as the starting material. It is for this reason that x is defined within this range. When chalcocite (Cu2S), for example, is to be analyzed by the same analysis method, for example, the molar ratio of copper with respect to sulfur is expected to be a larger value than 2. It is therefore thought possible to discriminate the positive electrode active material of the disclosure that can be produced using covellite as the starting material, from a positive electrode active material obtained using copper sulfide other than covellite (such as chalcocite) as the starting material.

The composition of the positive electrode active material for a fluoride ion battery of the disclosure can be identified by ICP-AES, for example. The supply solution used for ICP-AES may be prepared by weighing out 10 to 20 mg of the positive electrode mixture powder into a microwave digestion vessel, adding nitric acid, digesting it with microwaves, and then bringing it to a constant volume with ultrapure water. The ICP-AES apparatus used may be an Avio 550 Max by PerkinElmer Japan.

The positive electrode active material for a fluoride ion battery of the disclosure may further contain fluorine. The fluorine may be intercalated by battery charging, for example.

The positive electrode active material layer in the positive electrode active material for a fluoride ion battery of the disclosure which is produced by charging the battery under prescribed conditions may further comprise a solid electrolyte. The solid electrolyte may have the composition Pb₁₋ₓZrₓF₂₊₂ₓ, wherein 0 < x < 1. The value of x may be 0.01 to 0.3. The value of x may also be 0.03 or greater, 0.05 or greater, 0.07 or greater, 0.09 or greater or 0.1 or greater, and 0.25 or lower, 0.2 or lower, 0.15 or lower, 0.12 or lower or 0.1 or lower. The value of x may be 0.1, for a compound formula of Pb_{0.9}Zr_{0.1}F_{2.2}. When the positive electrode active material layer charges the battery in a state further comprising a solid electrolyte, the covellite is often altered to other copper sulfides. However, even when additional solid electrolyte is added the covellite is unlikely to be altered while the battery is being filled, and therefore the charge capacity is less likely to be reduced.

The solid electrolyte may be a commercial product, or it may be prepared by a common method. The method of preparing the solid electrolyte may be a method of mixing by mechanical milling between the metal element fluorides composing the solid electrolyte.

### <Method for producing positive electrode active material for fluoride ion battery>

The method for producing a positive electrode active material for a fluoride ion battery according to the disclosure comprises the following steps:
providing a fluoride ion battery comprising a positive electrode active material layer which comprises covellite, and
charging the fluoride ion battery at 500 mAh to 800 mAh per gram of covellite.

The present inventors have found that this production method allows production of a novel positive electrode active material for a fluoride ion battery that comprises copper and sulfur, and is amorphous.

### <Step of providing fluoride ion battery>

The method for providing a fluoride ion battery comprising a positive electrode active material layer that comprises covellite is not particularly restricted. For example, a positive electrode mixture containing covellite may be provided first and the positive electrode mixture may be compressed as powder to form a positive electrode active material layer. Next, the obtained positive electrode active material layer, and the separately provided electrolyte layer and negative electrode active material layer, may be stacked in that order to provide a fluoride ion battery.

For the purpose of the disclosure, "positive electrode mixture" means a composition that can form a positive electrode active material layer either by itself or by further comprising other components.

### <Charging step>

The charge capacity in the step of charging the fluoride ion battery may be 550 mAh or greater or 600 mAh or greater, and 750 mAh or lower, 700 mAh or lower or 650 mAh or lower, per gram of covellite. If the charge capacity is within this range, it will be easier to produce a positive electrode active material for a fluoride ion battery that comprises copper and sulfur, and is amorphous.

In the charging step, the fluoride ion battery may be charged at a temperature of 130°C or below. The temperature may be 20°C or higher, 25°C or higher, 30°C or higher, 40°C or higher, 50°C or higher, 60°C or higher, 70°C or higher or 80°C or higher, and 130°C or lower, 120°C or lower, 110°C or lower, 100°C or lower, 90°C or lower or 80°C or lower, or it may be 80°C. If the temperature is within this range it will be easier to produce a positive electrode active material for a fluoride ion battery that comprises copper and sulfur, and is amorphous.

The charging step is carried out with the battery in a completely discharged state. The phrase "with the battery in a completely discharged state" refers to a state in which the fluoride ion battery having the covellite-comprising positive electrode active material layer is completely uncharged.

In this case, the weight of the covellite used as reference may be determined based on the amount of starting material used.

The "battery in a completely discharged state" may be the battery in the following state, when the fluoride ion battery which comprises the covellite-containing positive electrode active material layer is to provided in a charged state:
a state in which the battery is disassembled, the positive electrode mixture containing the covellite is sampled, and the fluoride ion battery comprising the positive electrode active material layer containing the positive electrode mixture is again provided for discharge at 80°C to a final voltage of 0.05 V at a constant current (0.05 mA/cm²).

In this case, the weight of the covellite used as reference can be determined by measuring the weights of the copper and sulfur and calculating the sum of the weights. The weights of the copper and sulfur are determined by multiplying the concentrations of these elements by the amount of positive electrode mixture used in a newly provided battery. The concentration of the elements copper and sulfur can be measured by elemental analysis, such as ICP-AES.

Discharge of the battery may also be carried out within the specification range before disassembly of the battery. The amount of positive electrode mixture used in the newly provided fluoride ion battery may also be reduced as appropriate.

### <Positive electrode mixture>

The positive electrode mixture for a fluoride ion battery of the disclosure comprises a positive electrode active material for a fluoride ion battery of the disclosure, and may optionally comprise a solid electrolyte, a liquid electrolyte, a conductive aid and a binder.

### <Positive electrode active material for a fluoride ion battery>

The positive electrode active material for a fluoride ion battery is as described above, being a positive electrode active material for a fluoride ion battery according to the disclosure.

The content of the positive electrode active material in the positive electrode mixture may be 1 mass% or greater, 5 mass% or greater, 10 mass% or greater, 15 mass% or greater, 20 mass% or greater, 25 mass% or greater or 30 mass% or greater, and 100 mass% or lower, 80 mass% or lower, 60 mass% or lower, 50 mass% or lower, 45 mass% or lower, 40 mass% or lower, 35 mass% or lower or 30 mass% or lower, for example. The content may be 10 mass% to 50 mass%, 15 mass% to 45 mass% or 20 mass% to 40 mass%.

The positive electrode active material in the positive electrode mixture may consist entirely of the positive electrode active material for a fluoride ion battery of the disclosure, or it may be a combination of the positive electrode active material for a fluoride ion battery of the disclosure with another positive electrode active material. Examples of positive electrode active materials to be used, other than the positive electrode active material for a fluoride ion battery of the disclosure, include the copper sulfide disclosed in PTL 1 (CuₓS (1 ≤ x ≤ 2, and especially 1.8 ≤ x ≤ 2)) and copper selenide, as well as compounds that are known for use alone as positive electrode active materials for fluoride ion batteries, such as copper.

The proportion of the positive electrode active material for a fluoride ion battery of the disclosure in the total (100 mass%) of the positive electrode active material in the positive electrode mixture may be 50 mass% to 100 mass%, 60 mass% to 100 mass%, 70 mass% to 100 mass%, 80 mass% to 100 mass%, 90 mass% to 100 mass%, 95 mass% to 100 mass%, 99 mass% to 100 mass% or 100 mass%, for example. In other words, all of the positive electrode active material in the positive electrode mixture may be a positive electrode active material for a fluoride ion battery of the disclosure.

The positive electrode active material may be in any form allowing it to function as a positive electrode active material for a fluoride ion battery, without any particular restrictions. The positive electrode active material may be particulate, for example. The mean particle diameter of the positive electrode active material particles may be 1 nm to 500 µm, 10 nm to 100 µm or 20 nm to 50 µm, for example.

### <Solid electrolyte>

The positive electrode mixture for a fluoride ion battery of the disclosure may comprise a solid electrolyte. The solid electrolyte is as described above in relation to the positive electrode active material for a fluoride ion battery of the disclosure. The solid electrolyte assists in fluoride ion conduction.

The content of the solid electrolyte in the positive electrode mixture may be 1 mass% or greater, 5 mass% or greater, 10 mass% or greater, 20 mass% or greater, 30 mass% or greater, 40 mass% or greater, 50 mass% or greater or 60 mass% or greater, and 99 mass% or lower, 95 mass% or lower, 90 mass% or lower, 80 mass% or lower or 70 mass% or lower, for example. The content may be 40 mass% to 90 mass%, 50 mass% to 80 mass% or 60 mass% to 70 mass%.

The solid electrolyte in the positive electrode mixture may consist entirely of a solid electrolyte represented by Pb₁₋ₓZrₓF₂₊₂ₓ, wherein 0 < x < 1, or it may be a combination of a solid electrolyte represented by Pb₁₋ₓZrₓF₂₊₂ₓ, wherein 0 < x < 1, and another solid electrolyte. Examples of solid electrolytes other than solid electrolytes represented by Pb₁₋ₓZrₓF₂₊₂ₓ, wherein 0 < x < 1, include fluorides of lanthanoid elements such as La and Ce; fluorides of alkali elements such as Li, Na, K, Rb and Cs; and fluorides of alkaline earth elements such as Ca, Sr and Ba.

The proportion of the solid electrolyte represented by Pb₁₋ₓZrₓF₂₊₂ₓ, wherein 0 < x < 1, in the total (100 mass%) of the solid electrolyte in the positive electrode mixture may be 30 mass% to 100 mass%, 40 mass% to 100 mass%, 50 mass% to 100 mass%, 60 mass% to 100 mass%, 70 mass% to 100 mass%, 80 mass% to 100 mass%, 90 mass% to 100 mass%, 95 mass% to 100 mass%, 99 mass% to 100 mass%, or 100 mass%, for example. That is, all of the solid electrolytes in the positive electrode mixture may be solid electrolytes represented by Pb₁₋ₓZrₓF₂₊₂ₓ, wherein 0 < x < 1.

The form of the solid electrolyte is not particularly restricted. The solid electrolyte may be particulate, for example. The size of the solid electrolyte is not particularly restricted so long as it can function as a solid electrolyte for a fluoride ion battery.

### (Mass ratio of positive electrode active material content with respect to solid electrolyte content)

The mass ratio of the positive electrode active material content in the positive electrode mixture with respect to the specific solid electrolyte content is not particularly restricted. The mass ratio may be 0.1 to 10, 0.2 to 5 or 0.3 to 1, for example.

### <Liquid electrolyte>

The liquid electrolyte comprises, for example, a solvent and a salt dissolved in the solvent.

The solvent may be an organic solvent, for example. The organic solvent may be any one that can dissolve the salt. Examples of organic solvents include one or more selected from among glyme groups represented by R¹-O(CH₂CH₂O)ₙ-R² (where R¹ and R² are each independently an alkyl group of 4 or fewer carbon atoms or a fluoroalkyl group of 4 or fewer carbon atoms, and n is in the range of 2 to 10), such as triethyleneglycol dimethyl ether (G3) and tetraethyleneglycol dimethyl ether (G4); cyclic carbonates such as ethylene carbonate (EC), fluoroethylene carbonate (FEC), difluoroethylene carbonate (DFEC), propylene carbonate (PC) and butylene carbonate (BC); and chain carbonates such as dimethyl carbonate (DMC), diethyl carbonate (DEC) and ethylmethyl carbonate (EMC). The organic solvent may also be an ionic liquid.

The salt to be dissolved in the solvent may be a fluoride salt, for example. The fluoride salt may be one or more selected from among inorganic fluoride salts, organic fluoride salts and ionic liquids, for example. An inorganic fluoride salt may be XF (where X is at least one selected from among Li, Na, K, Rb and Cs). An organic fluoride salt may be one having an ammonium cation such as tetramethylammonium cation and a fluorine-containing anion.

The liquid electrolyte may comprise, for example, the aforementioned solvent, and the aforementioned salt dissolved to a concentration of 0.1 mol to 40 mol or 1 mol to 10 mol with respect to 1 L of the solvent.

The proportion of liquid electrolyte in the total (100 mass%) of the electrolyte in the positive electrode mixture may be 0 mass% to 50 mass%, 0 mass% to 30 mass%, 0 mass% to 10 mass%, 0 mass% to 5 mass%, 0 mass% to 3 mass%, 0 mass% to 1 mass% or 0 mass%, for example. In other words, the liquid electrolyte does not need to be included in the positive electrode mixture.

### <Conductive aid>

The conductive aid is not particularly restricted so long as it has electron conductivity.

The conductive aid may be a carbon material, for example. Carbon materials to be used as conductive aids may be one or more selected from among carbon blacks such as acetylene black, furnace black and thermal black, and graphene, fullerene and carbon nanotubes, for example.

The content of the conductive aid in the positive electrode mixture is not particularly restricted and may be 1 mass% or greater, 5 mass% or greater or 10 mass% or greater, and 30 mass% or lower, 20 mass% or lower or 10 mass% or lower, for example.

The form of the conductive aid is not particularly restricted. The conductive aid may be particulate or fibrous, for example.

### <Binder>

The binder may be one that is chemically and electrically stable in a fluoride ion battery.

The binder may be one or more selected from among, for example, fluorine-based binders such as polyvinylidene fluoride (PVDF)-based binders or polytetrafluoroethylene (PTFE)-based binders, and rubber-based binders such as styrene-butadiene rubber (SBR).

The content of the binder in the positive electrode mixture is not particularly restricted.

### <Other components>

The positive electrode mixture may comprise or not comprise various additives other than the components mentioned above. The types and contents of substances used as other components may be set as appropriate.

### <Method for producing positive electrode mixture for fluoride ion battery>

The positive electrode mixture for a fluoride ion battery can be produced by the same method as the method for producing a positive electrode active material for a fluoride ion battery according to the disclosure. Specifically, a positive electrode mixture for a fluoride ion battery can be produced by providing a fluoride ion battery having a positive electrode active material layer comprising covellite and optionally a solid electrolyte and a conductive aid, for example, and charging the fluoride ion battery at 500 mAh to 800 mAh per gram of covellite.

For production of the positive electrode mixture for a fluoride ion battery of the disclosure, a preliminary positive electrode mixture may be produced first. The term "preliminary positive electrode mixture" as used herein means the positive electrode mixture before charging of the fluoride ion battery at 500 mAh to 800 mAh per gram of covellite.

The method for producing the preliminary positive electrode mixture may include the following steps:
providing a starting material containing covellite and optionally a solid electrolyte and a conductive aid, and
mixing the starting material while applying mechanical impact to the starting material.

For production of the preliminary positive electrode mixture it is preferred to mix the starting material while applying mechanical impact, but if the solid electrolyte that is optionally used is a solid electrolyte represented by Pb₁₋ₓZrₓF₂₊₂ₓ, wherein 0 < x < 1, it will be possible to obtain a preliminary positive electrode mixture without altering the covellite.

The method of mixing the starting material while applying mechanical impact may be mixing by a mechanical milling method, as an example. Specifically, the method may be mixing of the starting material using a ball mill apparatus. The operating system for a ball mill apparatus may be any system such as a planetary, vibrating or rotational system. A given sample can be efficiently mixed using a planetary ball mill apparatus. This step may be carried out under an inert gas atmosphere.

When a planetary ball mill apparatus is used to mix the starting material, the platform rotation speed is not particularly restricted and may be 300 rpm or higher, 400 rpm or higher, 500 rpm or higher or 600 rpm or higher, and 1000 rpm or lower, 900 rpm or lower, 800 rpm or lower, 700 rpm or lower or 600 rpm or lower, for example. The platform rotation speed may also be 600 rpm.

When a planetary ball mill apparatus is used for mixing of the starting material, the mixing time is not particularly restricted but may be 0.5 hours or more, 1 hour or more, 2 hours or more or 3 hours or more, and 10 hours or less, 8 hours or less, 6 hours or less, 4 hours or less or 3 hours or less. The mixing time may also be 3 hours.

### <Fluoride ion battery>

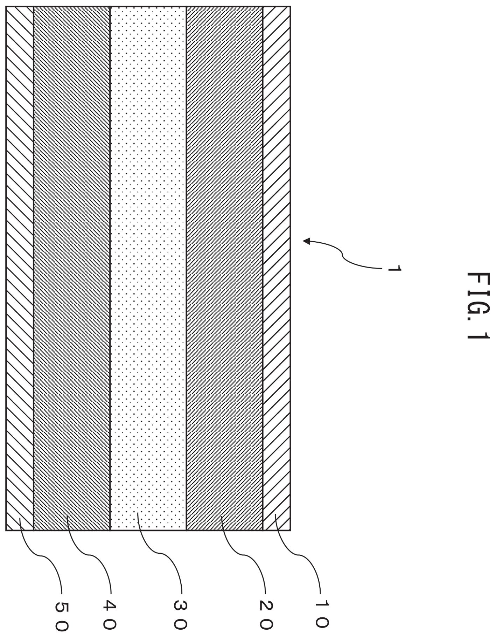

As shown in Fig. 1, the fluoride ion battery 1 of the disclosure has a positive electrode active material layer 20, the positive electrode active material layer comprising a positive electrode mixture for a fluoride ion battery of the disclosure.

As also shown in Fig. 1, the fluoride ion battery 1 of the disclosure has a positive electrode current collector layer 10, a positive electrode active material layer 20, an electrolyte layer 30, a negative electrode active material layer 40 and a negative electrode current collector layer 50, in that order.

The fluoride ion battery of the disclosure may be a liquid battery comprising an electrolyte solution as the electrolyte layer, or it may be a solid-state battery having a solid electrolyte layer as the electrolyte layer. The term "solid-state battery" as used herein refers to a battery using at least a solid electrolyte as the electrolyte, and the solid-state battery may also employ a combination of a solid electrolyte and a liquid electrolyte as the electrolyte. Alternatively, the solid-state battery of the disclosure may be an all-solid-state battery, i.e. a battery employing only a solid electrolyte as the electrolyte.

The fluoride ion battery may be either a primary battery or a secondary battery.

The form of the fluoride ion battery may be, for example, a coin, laminated (pouch), cylindrical or rectilinear form.

The fluoride ion battery of the disclosure can be suitably used in one or more types of vehicles selected from among hybrid electric vehicles (HEV), plug-in hybrid electric vehicles (PHEV) and battery electric vehicles (BEV).

The elements used to construct the fluoride ion battery of the disclosure will now be described.

### <Positive electrode current collector layer>

Examples of materials for the positive electrode current collector layer include lead, stainless steel (SUS), aluminum, nickel, iron, titanium, platinum and carbon.

The form of the positive electrode current collector layer may be a foil, mesh or porous form.

### <Positive electrode active material layer>

The positive electrode active material layer comprises a positive electrode mixture for a fluoride ion battery of the disclosure. The positive electrode mixture for a fluoride ion battery of the disclosure is as described above in relation to the positive electrode mixture for a fluoride ion battery of the disclosure.

The positive electrode active material layer may be, for example, a green compact of the positive electrode mixture for a fluoride ion battery of the disclosure.

The form of the positive electrode active material layer is not particularly restricted, and it may be an essentially flat sheet-like form.

The thickness of the positive electrode active material layer is not particularly restricted and may be a thickness suited for the structure of the fluoride ion battery. The thickness of the positive electrode active material layer may be 100 nm to 1 mm, for example.

### <Electrolyte layer>

The electrolyte layer comprises at least an electrolyte. The electrolyte may be either a solid electrolyte or a liquid electrolyte.

When the fluoride ion battery of the disclosure is a solid-state battery, the electrolyte layer may comprise a solid electrolyte and optionally a binder.

The solid electrolyte may be appropriately selected from among those mentioned above as examples to be included in the positive electrode mixture. The solid electrolyte to be included in the positive electrode mixture and the solid electrolyte in the electrolyte layer may be of the same type or different types.

The binder is as described above in relation to the positive electrode mixture for a fluoride ion battery of the disclosure.

The electrolyte layer may comprise a liquid electrolyte and a separator to hold the liquid electrolyte. These are included particularly when the fluoride ion battery of the disclosure is a liquid battery.

The liquid electrolyte is as described above in relation to the positive electrode mixture for a fluoride ion battery of the disclosure.

The separator used may be one that is known as a separator for a fluoride ion battery.

A portion of the electrolyte layer may be a negative electrode active material layer formed by charging, for example. Specifically, the electrolyte layer may be one that produces de fluorination reaction of the metal fluoride as a solid electrolyte at the interface between the electrolyte layer and negative electrode current collector layer during charge of the fluoride ion battery, to produce a metal layer (such as a Pb layer) as a negative electrode active material layer at their interface.

The form of the electrolyte layer is not particularly restricted, and it may be an essentially flat sheet-like form.

The thickness of the electrolyte layer is not particularly restricted and may be a thickness suited for the structure of the fluoride ion battery. The thickness of the electrolyte layer may be 100 nm to 1 mm, for example.

### <Negative electrode active material layer>

The negative electrode active material layer comprises a negative electrode active material, and may also optionally comprise an electrolyte, a conductive aid and a binder.

The negative electrode active material may be one or more selected from among metals alone, alloys, metal oxides, metal fluorides, carbon materials and polymer materials, for example. The metal elements composing the negative electrode active material may be one or more selected from among La, Ca, Al, Eu, Li, Si, Ge, Sn, In, V, Cd, Cr, Fe, Zn, Ga, Ti, Nb, Mn, Yb, Zr, Sm, Ce, Mg and Pb, for example. The carbon material composing the negative electrode active material may be one or more selected from among graphite, coke and carbon nanotubes, for example. The polymer material composing the negative electrode active material may be one or more selected from among polyaniline, polypyrrole, polyacetylene and polythiophene.

The negative electrode active material may be Pb_{0.9}Zr_{0.1}F_{2.2}, for example.

The electrolyte, conductive aid and binder are as described above in relation to the positive electrode mixture for a fluoride ion battery of the disclosure.

The form of the negative electrode active material layer is not particularly restricted, and it may be an essentially flat sheet-like form.

The thickness of the negative electrode active material layer is not particularly restricted and may be a thickness suited for the structure of the fluoride ion battery. The thickness of the negative electrode active material layer may be 100 nm to 1 mm, for example.

### <Negative electrode current collector layer>

Examples of materials for the negative electrode current collector layer include stainless steel (SUS), copper, nickel, iron, titanium, platinum and carbon.

The form of the negative electrode current collector layer may be a foil, mesh or porous form.

### <Method for producing fluoride ion battery>

The method for producing a fluoride ion battery includes producing a positive electrode active material for a fluoride ion battery by the method of the disclosure. The method of the disclosure for producing a positive electrode active material for a fluoride ion battery is as described above, as a method for producing a positive electrode active material for a fluoride ion battery according to the disclosure.

More specifically, the method for producing a fluoride ion battery may include, for example, providing a positive electrode active material layer comprising covellite, and charging at 500 mAh to 800 mAh per gram of covellite.

### [Examples]

### <Example 1>

### <Fabrication of preliminary positive electrode mixture>

Covellite copper sulfide (compositional formula: CuS) as a positive electrode active material (product of Mitsuwa Chemicals Co., Ltd.), Pb_{0.9}Zr_{0.1}F_{2.2} as a solid electrolyte and acetylene black (AB) as a conductive aid were mixed by mechanical milling using a planetary ball mill apparatus (PL-7 Premium Line planetary ball mill by Fritsch Co.) to obtain a powdered preliminary positive electrode mixture. The mass ratio of the positive electrode active material, solid electrolyte and conductive aid was 30:66:4. The ball mill mixing was carried out with a platform rotation speed of 600 rpm in a dry argon atmosphere over a period of 3 hours.

### <Fabrication of all-solid-state fluoride ion battery>

A green compact was formed using 12 mg of the obtained positive electrode mixture powder as the positive electrode active material layer.

The green compact was formed as an electrolyte layer, using 150 mg of La_{0.95}Sr_{0.05}F_{2.95} powder as the solid electrolyte.

For the negative electrode active material layer, a green compact was formed using 50 mg of a mixture of Pb_{0.9}Zr_{0.1}F_{2.2} powder as the negative electrode active material and AB powder as a conductive aid. The AB content of the mixture was 5 mass% with respect to the total mixture. A 220 mg Pb board was contact bonded onto one side surface of the formed negative electrode active material layer (the side on which the negative electrode current collector layer was later to be disposed). The Pb board was disposed for the purpose of standardizing the cell voltage reference.

A platinum foil as the positive electrode current collector layer, a positive electrode active material layer, an electrolyte layer, a negative electrode active material layer and an aluminum foil as the negative electrode current collector layer, were layered in that order to fabricate an all-solid-state fluoride ion battery. The diameter of the all-solid-state fluoride ion battery was 11.28 mm. The all-solid-state fluoride ion battery was set in a ceramic cylindrical container with an inner diameter of 11.28 mm, and anchored between stainless steel cylinders with diameters of 11.28 mm from both the negative electrode current collector layer and the positive electrode current collector layer sides.

The obtained all-solid-state fluoride ion battery was charged while under vacuum suction in a sealed container, under conditions with a testing temperature of 80°C, a current density of 0.05 mA/cm² and a final maximum voltage of 1.6 V. An all-solid-state fluoride ion battery charged under the prescribed conditions was thus fabricated. By the following evaluation it was confirmed that the positive electrode active material in the obtained battery contained copper and sulfur, and was amorphous.

### <Comparative Example 1>

An all-solid-state fluoride ion battery charged under prescribed conditions was fabricated in the same manner as Example 1, except that the testing temperature during charge was changed from 80°C to 140°C, and the charge capacity was increased.

### <Comparative Example 2>

An all-solid-state fluoride ion battery charged under prescribed conditions was fabricated in the same manner as Example 1, except that chalcocite (Cu2S) was used instead of covellite (CuS) as the starting material for fabrication of the preliminary positive electrode mixture.

### <Comparative Example 3>

An all-solid-state fluoride ion battery charged under prescribed conditions was fabricated in the same manner as Example 1, except that copper (Cu) was used instead of covellite (CuS) as the starting material for fabrication of the preliminary positive electrode mixture.

### <Comparative Example 4>

An all-solid-state fluoride ion battery charged under prescribed conditions was fabricated in the same manner as Example 1, except that a capacity limit (240 mAh/l g covellite) was provided as the cutoff conditions for the charge test.

### <Evaluation>

### <Evaluation of fluoride ion batteries>

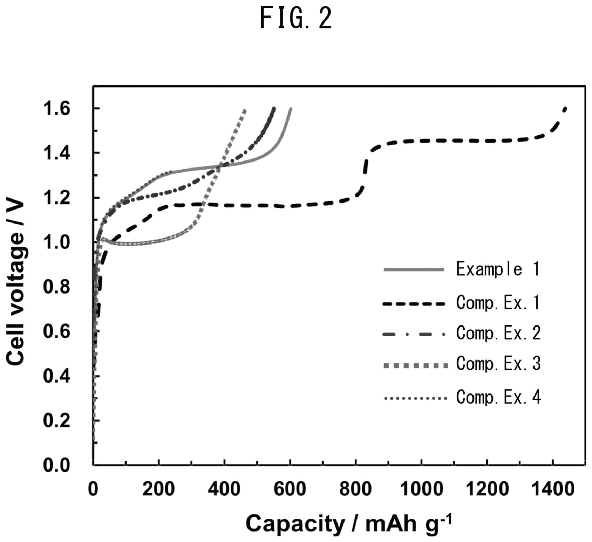

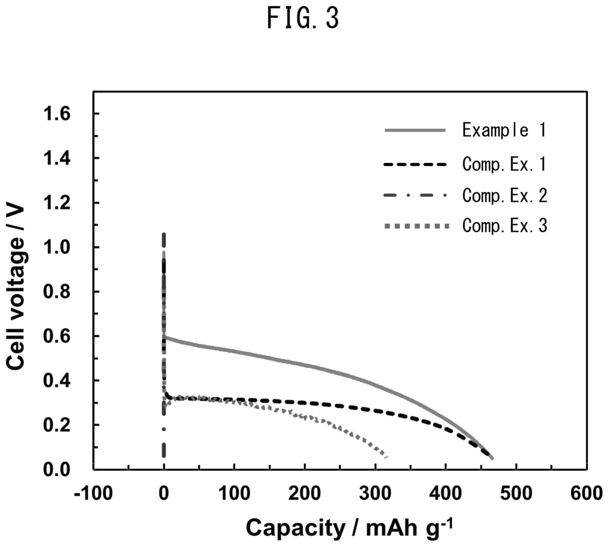

The fluoride ion batteries of each of the examples charged under the prescribed conditions were subjected to a discharge test with the testing temperature changed to room temperature (24 ±3°C). After temperature change, the members that had been heated during charge were thoroughly cooled by holding for 12 hours or longer prior to discharge. The current density during discharge was 0.05 mA/cm², and the final lower voltage limit was 0.05 V. A frequency response analyzer-mounted electrochemical measurement system (VMP-300 high performance electrochemical measurement system by Bio-Logic) was used for the charge-discharge test. The battery of Comparative Example 4 was not subjected to a discharge test. The charge curve is shown in Fig. 2, and the discharge curve is shown in Fig. 3. The results of the charge-discharge test are shown in Table 1. In Table 1, "voltage at DOD50" means the voltage at 50% depth of discharge, i.e. the voltage exhibiting a capacity of half the discharge capacity. The "discharge energy" was determined by definite integration of the area of the region surrounded by the discharge curve and x-axis, using analysis software (EC-Lab by Bio-Logic), as the energy density per mass of the positive electrode active material.

### <Compositional analysis>

The compositional ratio of Cu and sulfur (S) in the preliminary positive electrode mixture of each Example was analyzed by inductively coupled plasma atomic emission spectroscopy (ICP-AES). The supply solution used for ICP-AES was prepared by weighing out 10 to 20 mg of the positive electrode mixture powder into a microwave digestion vessel, adding nitric acid, digesting it with microwaves, and then bringing it to a constant volume with ultrapure water. The ICP-AES apparatus used was an Avio 550 Max by PerkinElmer Japan. The results are shown in Table 1 as the value of x for Cu_{X}S (moles).

### <XRD analysis>

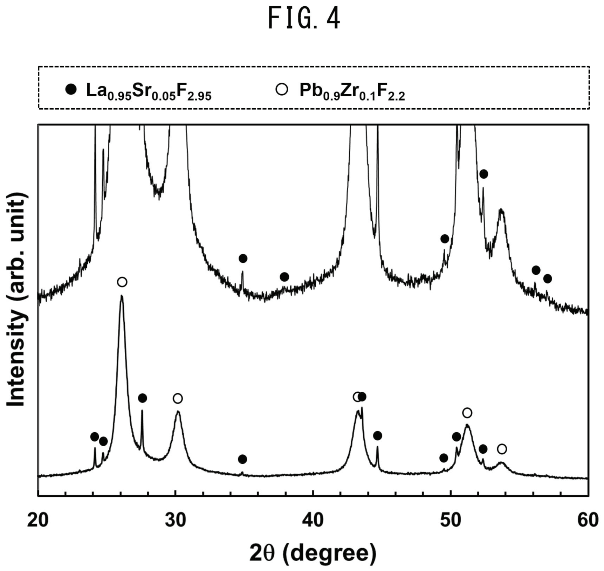

X-ray diffraction (XRD) measurement was performed to examine the presence or absence of a crystal phase derived from the positive electrode active material in the positive electrode active material layer, in the charged state. The charge test for each example was reproduced to fabricate a charged battery, and the positive electrode active material layer was measured. The charged battery was disassembled in a glove box in a dry argon atmosphere, and the positive electrode active material layer was scratched to obtain a powder sample. Measurement was conducted by a concentration method in which CuKα rays were irradiated using a SmartLab apparatus by Rigaku Corp. under conditions with a tube voltage of 45 kV and a tube current of 200 mA. The sample was sealed in an airtight sample stage under an argon atmosphere and measured without exposure to air. The substrate used to mount the sample was a non-reflecting Si board. The XRD patterns for each of the obtained example samples are shown in Figs. 4 to 10. The crystal phases detected by XRD analysis are shown in Table 1.

In Fig. 4 and Figs. 6 to 9, the patterns are shown enlarged in the long axial direction, in order to distinguish the diffraction lines for solid electrolyte Pb_{0.9}Zr_{0.1}F_{2.2} in the positive electrode active material layer and La_{0.95}Sr_{0.05}F_{2.95} which was mixed in from the solid electrolyte layer, for clarification of the diffraction lines of the crystal phase derived from the positive electrode active material.

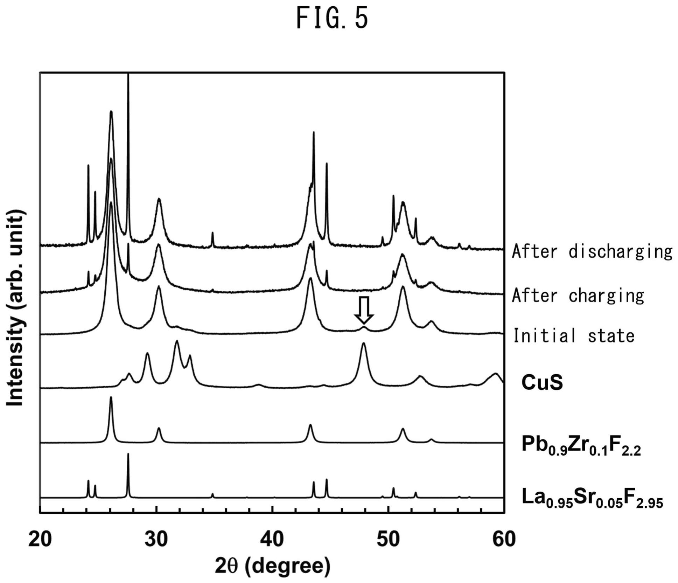

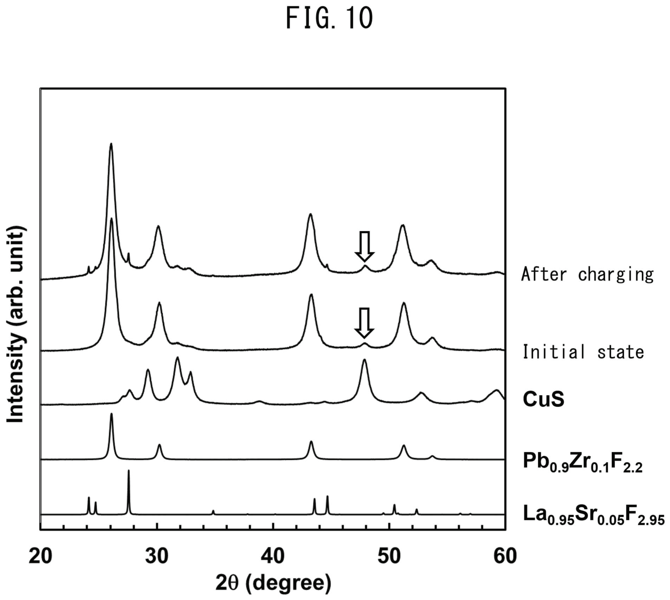

Fig. 5 shows an XRD pattern for the positive electrode active material layer of Example 1, initially (before charge), after charge under the prescribed conditions and after discharge, and Fig. 10 shows an XRD pattern for the positive electrode active material layer of Comparative Example 4, initially (before charge) and after charge under the prescribed conditions. For comparison with these XRD patterns there are also shown XRD patterns for CuS, Pb_{0.9}Zr_{0.1}F_{2.2} (solid electrolyte of positive electrode active material layer) and La_{0.95}Sr_{0.05}F_{2.95} (solid electrolyte of solid electrolyte layer).

### [Table 1]

**Table 1**

| | Starting material for active material | Charge temperature [°C] | x in Cu_{X}S | Crystal phase | | Charge capacity [mAh/g] | Discharge capacity [mAh/g] | Voltage at DOD50 [V] | Charge/discharge efficiency [%] | Discharge energy [Wh/kg] |
|---|---|---|---|---|---|---|---|---|---|---|
| | | | | Copper fluoride | Copper sulfide | | | | | |
| Example 1 | CuS | 80 | 1.18 | - | - | 602 | 466 | 0.445 | 77.4 | 190 |
| Comp. Ex. 1 | CuS | 140 | 1.18 | CuF₂ | - | 1438 | 467 | 0.291 | 32.5 | 123 |
| Comp. Ex. 2 | Cu2S | 80 | 2.15 | - | CuS | 551 | 0 | - | 0 | 0 |
| Comp. Ex. 3 | Cu | 80 | 161< | CuF₂ | - | 465 | 316 | 0.269 | 68 | 78 |
| Comp. Ex. 4 | CuS | 80 | 1.18 | - | CuS | 240 | - | - | - | - |

As shown in Figs. 4 and 5, no crystal phase from positive electrode active material was observed in the sample obtained from the positive electrode active material layer of Example 1 after charging under the prescribed conditions. More specifically, as shown in Fig. 5 in particular, for the sample obtained from the initial positive electrode active material layer of Example 1 (before charge), i.e. the sample corresponding to the preliminary positive electrode mixture, a peak was confirmed for CuS as the starting material near 48°, as indicated by the arrow. In contrast, with the sample obtained from the positive electrode active material layer of Example 1 after charge, i.e. the sample corresponding to the positive electrode mixture of the disclosure, no peak was observed near 48°, nor were there observed any other diffraction peaks derived from CuS. This is attributed to the CuS fluorinated by charge having been rendered amorphous. In other words, the positive electrode active material formed in Example 1 presumably was amorphous and contained copper and sulfur. It is also possible that fluorine intercalated by charging was included in the positive electrode active material.

As shown in Fig. 5, for Example 1 no peak was observed for CuS near 48°, nor were there observed any other diffraction peaks derived from CuS, even after discharge. This indicates that the amorphous form was maintained even after discharge, without restoration of the positive electrode active material to the original covellite crystals.

As shown in Table 1, with the battery of Example 1 which comprised copper and sulfur and included an amorphous positive electrode active material, the discharge energy at room temperature was high. Without being restricted to any particular theory, the reason for this is conjectured to be as follows. Specifically, it is believed that such a structure can inhibit production of active materials with high resistance at low temperatures such as room temperature (such as copper fluoride (CuF2)) during charge. It is also thought that the positive electrode active material of the disclosure according to Example 1 also has lower resistance and a higher reaction potential than CuF2. Presumably, electrode reaction proceeds smoothly even at low temperatures such as room temperature, thus allowing large-discharge energy to be extracted.

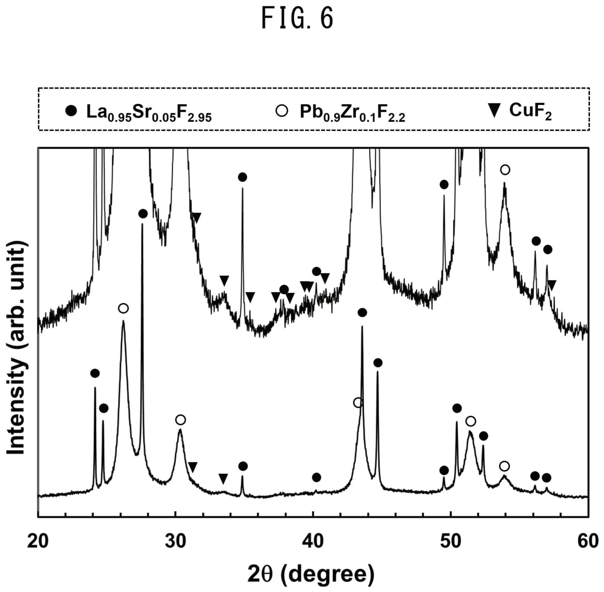

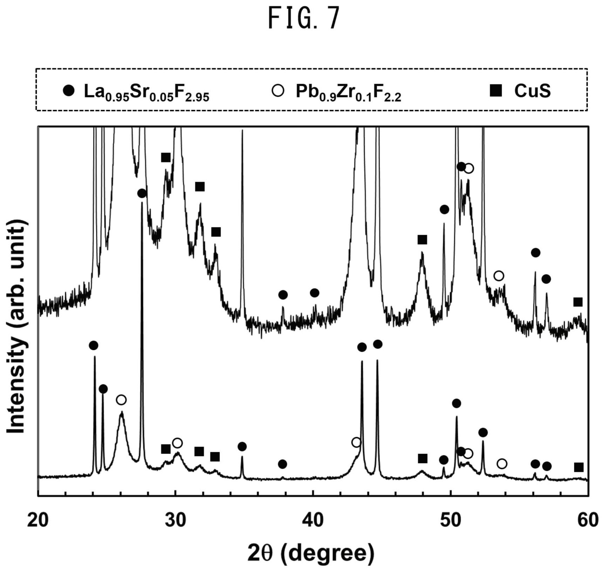

In contrast, as shown in Figs. 6 to 8, copper fluoride (CuF₂) and copper sulfide (CuS) were observed as crystal phases derived from the positive electrode active material after charging in Comparative Examples 1 to 3. In Comparative Example 1, secondary reactions occurred during charge at high temperature (140°C) while sulfur was lost, presumably resulting in production of CuF2 as a fluoride. In Comparative Example 2, since CuS was observed in the XRD pattern shown in Fig. 7, it is believed that charging promoted primarily the reaction represented by the following formula, while partially promoting the reaction producing the amorphous positive electrode active material from CuS:

Cu2S + 2F⁻ → CuS + CuF2

Incidentally, observation of CuS in the XRD pattern of Comparative Example 2 shown in Fig. 7 suggests that CuF2 was also produced as the reaction represented by the above formula proceeded. It is thought, however, that no peak was observed for CuF₂ because the peak for CuS was relatively stronger than for CuF2 while the peak for CuS was also near the peak for CuF2 peak, or because the produced CuF2 was in the form of nanocrystals with extremely weak diffraction intensity.

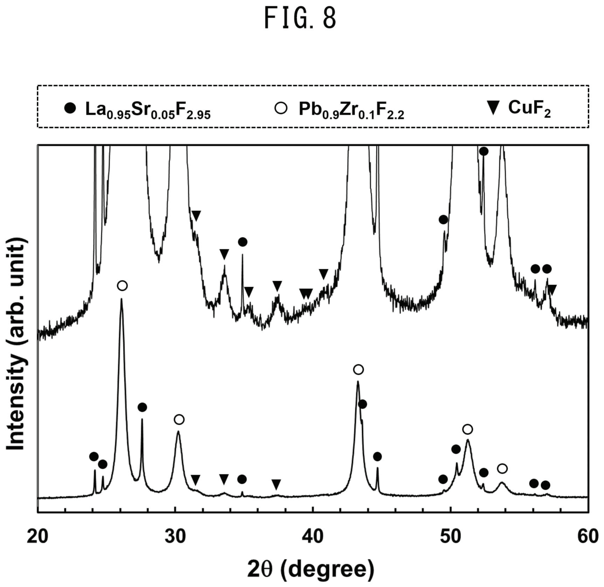

In the XRD pattern of Comparative Example 3 shown in Fig. 8, the Cu charge product CuF₂ was clearly observed.

In other words, it is thought that in Comparative Examples 1 to 3, electrode reaction was inhibited during discharge resulting in low extracted energy at low temperature because all three comprised CuF2 which produces high resistance. In Comparative Example 1, the efficiency of charge-discharge was significantly reduced due to progressive secondary reactions during charge.

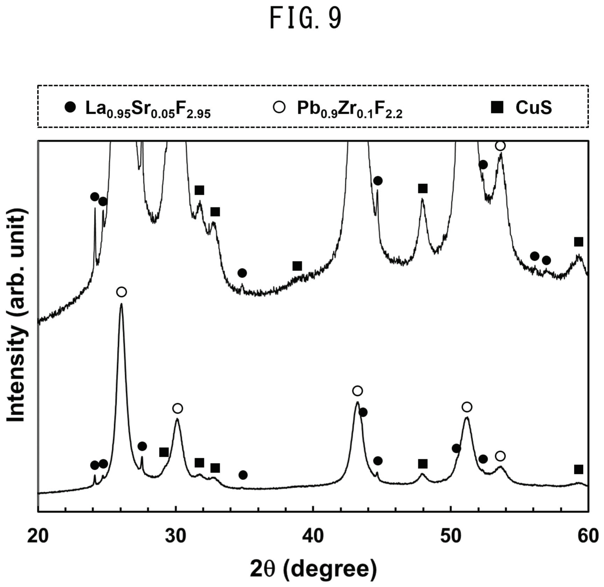

In Comparative Example 4, the charge capacity was lower compared to Example 1. In the XRD pattern for Comparative Example 4 shown in Figs. 9 and 10, a peak was observed near 48° due to CuS in the charged state similar to the initial state (before charge), as indicated by the arrows. This suggests that in Comparative Example 4, during charge, the crystal structure was maintained without production of amorphous positive electrode active material, even though fluoride ions were intercalated into the crystal structure of the covellite. In other words, Comparative Example 4 suggests that charging at or above a specific capacity is necessary in order to obtain an amorphous positive electrode active material.

### REFERENCE SIGNS LIST

1 Fluoride ion battery
10 Positive electrode current collector layer
20 Positive electrode active material layer
30 Electrolyte layer
40 Negative electrode active material layer
50 Negative electrode current collector layer

## Claims

1. A positive electrode active material for a fluoride ion battery,
wherein the positive electrode active material comprises copper and sulfur, and
wherein the positive electrode active material is amorphous.

2. The positive electrode active material for a fluoride ion battery according to claim 1, which is produced by charging a fluoride ion battery having a covellite-comprising positive electrode active material layer, at 500 mAh to 800 mAh per gram of covellite.

3. The positive electrode active material for a fluoride ion battery according to claim 1, wherein the molar ratio of copper to sulfur is 0.70 to 1.70.

4. The positive electrode active material for a fluoride ion battery according to claim 3, wherein the molar ratio is 0.85 to 1.25.

5. The positive electrode active material for a fluoride ion battery according to any one of claims 2 to 4, wherein:
the positive electrode active material layer further comprises a solid electrolyte, and
the solid electrolyte has the composition Pb₁₋ₓZrₓF₂₊₂ₓ, wherein 0 < x < 1.

6. The positive electrode active material for a fluoride ion battery according to claim 5, wherein x is 0.01 to 0.3.

7. A positive electrode mixture for a fluoride ion battery, comprising a positive electrode active material for a fluoride ion battery according to any one of claims 1 to 6.

8. A fluoride ion battery,
having a positive electrode active material layer, and
the positive electrode active material layer comprising a positive electrode mixture for a fluoride ion battery according to claim 7.

9. A method for producing a positive electrode active material for a fluoride ion battery according to any one of claims 1 to 6, the method including the following steps:
providing a fluoride ion battery having a positive electrode active material layer comprising covellite, and
charging the fluoride ion battery at 500 mAh to 800 mAh per gram of covellite.

10. The method for producing a positive electrode active material for a fluoride ion battery according to claim 9, wherein the fluoride ion battery is charged at a temperature of 130°C or lower.
